# EUROPEAN PATENT SPECIFICATION

(11) **EP 4 115 094 B1**
(45) Date of publication and mention of the grant of the patent: **18.02.2026**
(21) Application number: 21710437.1
(22) Date of filing: 04.03.2021
(51) Int. Cl.: F16B 7/06, F16B 2/00, F16B 7/04, F16B 21/07, E04C 5/12

(54) **WIND BRACE TENSIONING BRACKET AND TENSIONING SYSTEM**
SPANNKONSOLE FÜR EINE WINDTURBINE UND SPANNSYSTEM
SUPPORT DE TENSION DE PIÈCE DE CONTREVENTEMENT ET SYSTÈME DE TENSION

(30) Priority: 04.03.2020 DK PA202000294
(43) Date of publication of application: 11.01.2023
(73) Proprietor: Simpson Strong-Tie A/S, 8300 Odder (DK)
(72) Inventor: HANSEN, Jacob, 8300 ODDER (DK); FREDERIKSEN, Henrik, 8300 ODDER (DK)
(74) Representative: Fuchs Patentanwälte Partnerschaft mbB
(86) International application number: PCT/EP2021/055521
(87) International publication number: WO 2021/176019

(56) References cited:
- EP-A2- 2 093 343
- FR-A1- 2 519 677
- GB-A- 2 495 742
- US-B2- 7 296 386
- SIMPSON STRONG-TIE INT. LTD: "ETA-Danmark A/S G�teborg Plads 1 DK-2150 Nordhavn", 12 November 2020 (2020-11-12), pages 1 - 81, XP93167052, Retrieved from the Internet <URL:https://pim.strongtie.eu/uploads/media/gallery_pdf/e/eta100440-sst-roof-connectors-r5-2020.pdf>

## Description

The present invention relates to a tensioning bracket and tensioning system for tensioning at least one perforated band having and defining a longitudinal band axis, the bracket comprising at least one bracket element having a thickness.

Tensioning brackets and tensioning systems are known for tensioning wires and straps when securing building parts e.g. in order to tie down a girder. In order to connect e.g. a strap (typically of metal) with another part, either the strap itself or the tensioning bracket typically needs to be adapted on site. Upon adaption of e.g. the length of the strap(s) the bracket is connected to the strap(s) to be tensioned i.e. pulled towards another part e.g. a threaded rod connected to the foundation or two straps both to be tensioned by pulling them towards each other. Due to the adaption of the length of the straps, the bracket and the straps need to be connected on site. Hence, the connection between the strap and the bracket is carried out by the workers on site.

A tensioning bracket is subjected to extraordinary loads during period of times in which the elements of the whole construction are subjected to an extraordinary load e.g. during strong wind or large quantities of snow. Likewise, the tensioning system (both the bracket device and other component parts in the system) is subjected to an extraordinary load during the initial tensioning i.e. pulling two parts towards each other. This is due to the fact that the device and parts may be tensioned more than necessary in order to compensate for parts and the building as a whole "settling" e.g. that the strap over time will be loosened due to the wooden parts drying, and hence getting smaller, or simply that the whole construction is slowly working itself to a sustaining position. Due to similar reasons, the tensioning system (both the bracket device and other component parts in the system), including the brace/strap/perforated band, may also be subjected to increased loads. In both situations, it is important that the tensioning bracket is strong. Furthermore it is important that the connection between the tension device and the brace/strap/perforated band are connected in a way that minimises the risk of faults from the worker during the installation. GB2495742A discloses a securing device for a tensioning system for reinforcing trusses in a roof.

The present invention addresses the above disadvantages and drawbacks of the prior art. More specifically, it provides an improved tensioning bracket and tensioning system which is easy and safe to install on a brace/strap/perforated band.

Furthermore, the present invention provides an improved tensioning bracket and tensioning system which is cheaper to manufacture.

The above considerations, together with numerous other considerations, advantages and features, which will become evident from the below description, are addressed in accordance with the present invention. In a first aspect, the present invention provides a tensioning bracket for tensioning at least one perforated band defining a longitudinal band axis, the bracket comprising at least one bracket element having a thickness and comprising:
- a first body section defining:
- a first longitudinal body axis,
- a first body width, and the first body section comprising a number of projecting pins arranged to receive the perforations of the band, the projecting pins identifying a pin side and an opposing non-pin side of the bracket element, and
a second body section defining:
- a second longitudinal body axis,
- a second body width comprising a number of holes arranged in the same pattern as the projecting pins of the first body section, and
- the bracket element further comprising an attachment section for attaching means for pulling and thereby tensioning, in use, the perforated band,
**wherein** the first and second body sections are connected to each other via a common section made of the same piece of material as the first and second body section and wherein the bracket element is configured so that when bending the element along a bending line in the common section the pins of the first section are received in holes of the second body section.

In this way, the pull in the tensioning bracket is transferred from the pulling means to the tensioning bracket and then via the pins and holes to the perforated band substantially in a straight line. Thereby, a true double shear connection is achieved.

In this way the tensioning bracket provides an even distribution of forces from the one part to the other.

In addition, the bending line in the common section may be arranged perpendicular to the longitudinal axis of the element and when the bracket element is bent, the longitudinal axis of the first and second body sections in all their relative positions are positioned in the same plane perpendicular to both the pin side and the non-pin side.

In this way, it is inherently defined that this is always the case when bending the element perpendicular to the longitudinal axis.

Moreover, the tensioning bracket may further comprise a tensioning nut arranged in the attachment section.

Furthermore, the tensioning nut may be fixated in the longitudinal direction in the attachment section.

Also, the common section may comprise cut-outs.

In this way, it is easily possible for the worker to bend the two body parts towards each other and hence connect and lock the bracket to a strap.

Additionally, the attachment section may comprise a holding section that is adapted for substantially surrounding the tensioning nut.

In this way, the attachment section may be adapted for receiving the tensioning nut. The tensioning nut may rotate freely in the holding section. In this way, the tensioning nut may rotate and hence the thread of the nut may tighten the band.

Moreover, the tensioning nut may comprise a flange having a larger diameter than the rest of the outer diameter of the nut.

In this way, the flange forms a surface that is capable of transferring the force from the tensioning nut to the attachment section of the bracket element. If e.g. a threaded rod is inserted into the tensioning nut, the force applied from the threaded rod is transferred via the thread to the nut and from the flange of the nut to the bracket element and finally to the perforated band via the pins of the first body section.

Furthermore, the tensioning nut may comprise a high friction periphery area.

In this way, it is easy for the worker to turn the nut until a wrench or similar tool is necessary.

Moreover, the number of holes may be equal to or greater than the number of pins.

If the number of holes is larger than the number of pins it may be possible to have additional means for connecting the first and second body sections e.g. a further locking pin, or nut.

Further, the pins may extend through the second section by more than the thickness of the bracket element.

In this way, the pins of the bracket element may be securely locked e.g. by bending the projecting pin section.

In addition, at least one of the pins may be longer than the other pin(s).

In this way, the at least one pin has sufficient length to be folded and thereby lock the body sections together.

Moreover, the first and/or second body section may comprise one or more wall sections.

In this way, the body sections are positioned correctly in relation to each other.

Furthermore, the wall section(s) may comprise locking means for locking the first and second body section in relation to each other.

In this way, a further safety aspect is possibleby ensuring that the two body sections will non part from each other.

Also, the area of a hole the one body section may be less than 2-30% larger than the cross-sectional area of the matching pin to this hole i.e. a pin of the other body section.

In this way, a firm contact is possible between the pins and the holes during load. Hence, a more preferred overall load distribution in the bracket is achieved.

Additionally, the material may be high strength steel, galvanised steel or stainless steel.

In an embodiment, the common section when bent more than 5 deg. perpendicular to the longitudinal body axis from an initial first position is plastically deformed to substantially stay in a second different position by at least 3 deg. from the initial position.

Moreover, the tensioning system may comprise two tensioning brackets and a coupling member, the tensioning brackets having the attachment section of the tensioning brackets pointing towards each other.

Finally, a coupling member may be a threaded rod or a bolt.

The invention and its many advantages will now be described in more detail below by way of example only, with reference to the accompanying schematic drawings, which for the purpose of illustration show some non-limiting embodiments and in which:
Fig. 1A shows a schematic perspective view of an embodiment of a tensioning bracket according to the present invention,
Fig. 1B shows a sideview of the tensioning bracket shown in Fig. 1A,
Fig. 1C shows a perspective view of the tensioning nut,
Figs. 2A - 2B show a side view of the body part of the tensioning bracket in an open (angled) position and a closed (parallel) position,
Figs. 3A - 3D show the body part of the tensioning bracket according to the invention,
Figs. 4A - 4E show the process of inserting and tensioning the perforated band,
Fig. 5A shows in a perspective view an embodiment of a tensioning system according to the present invention comprising two tensioning brackets,
Fig. 5B shows a side view of the tensioning system shown in Fig. 5A,
Fig. 6 shows a tensioning bracket in a mounted situation, in this embodiment as a tie down, and
Fig. 7 shows the distribution of forces in a tensioning bracket.

All the figures are highly schematic and not necessarily to scale, and they show only those parts which are necessary in order to elucidate the invention, other parts being omitted or merely suggested.

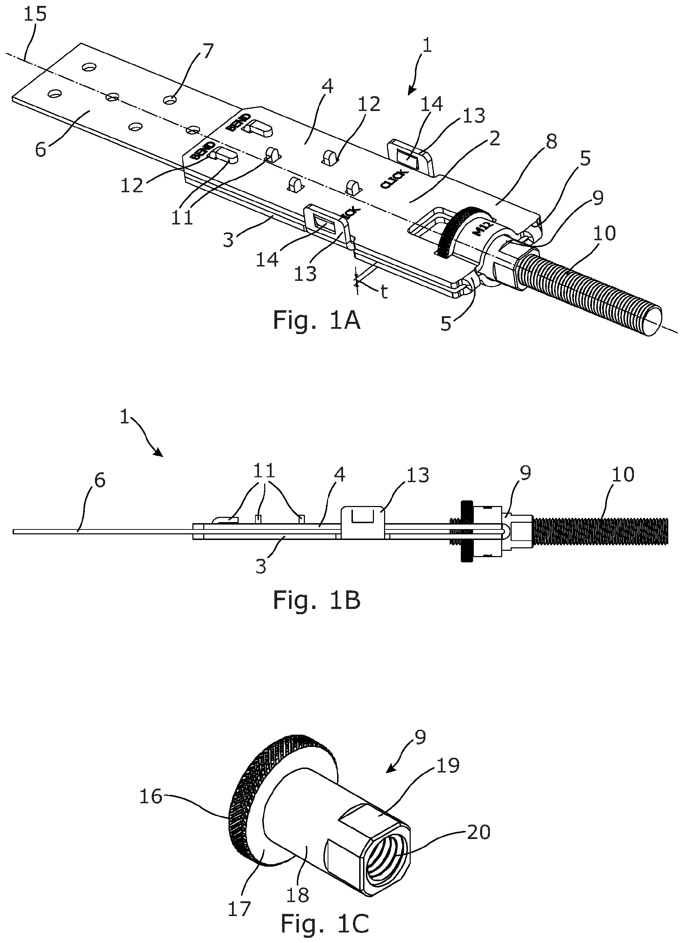

Fig. 1A shows a perspective view of an embodiment of a tensioning bracket 1 according to the invention. The tensioning bracket 1 comprises a bracket element 2 having a thickness t. The bracket element 2 comprises a first body section 3 and a second body section 4. The first body section 3 and the second body section 4 are connected via a common section 5. The bracket element 2 clamps around a perforated band 6 e.g. a wind brace strap. The perforated band 6 comprises a number of holes 7. The bracket element 2 comprises an attachment section 8. In this embodiment, the attachment section 8 is provided with a tensioning nut 9. A threaded rod 10 is screwed into the tensioning nut 9. A number of pins 11 is seen projecting through pin holes 12 in the second body section 4. The pins 11 project from the first body section 3 (not visible). The pins 11 project through the holes 7 of the perforated band 6 positioned between the two body sections 3, 4.

In this embodiment, wall sections 13 extend from the first body section 3. It is shown that in this embodiment the wall sections 13 comprise locking means 14. Furthermore, it seen that the longitudinal axis 15 of the perforated band 6 is parallel with the longitudinal axis of both the first and second body section 3, 4 as well as the tensioning nut 9 and the threaded rod 10.

Fig. 1B shows the tensioning bracket 1 in a side view. In this view, it is seen that that first body section 3 and the second body section 4 are substantially parallel when clamping around the perforated band 6. The pins 11 project from the first body section 3 through holes 12 (not visible) in the second body section 4. It is furthermore seen that the threaded rod 10 screwed into the tensioning nut 9 is substantially in the same plane as the perforated band 6. In this way, it is achieved that the transferring of tensioning force from the threaded rod 10 to the perforated band 6 via the tensioning nut 9 and the tensioning bracket 1 is direct and applies no torque.

Fig. 1C shows a perspective view of the tensioning nut 9. The tensioning nut 9 comprises a flange 16 having a flange surface 17. A part of the nut body 18 comprises flat surfaces 19 adapted to receive a tool e.g. a spanner or a wrench. In this embodiment, the tensioning nut 9 further comprises an internal thread 20. It is to be understood by the skilled person that that the thread in another embodiment may be external. Furthermore, it is to be understood that the thread may be a ratchet mechanism.

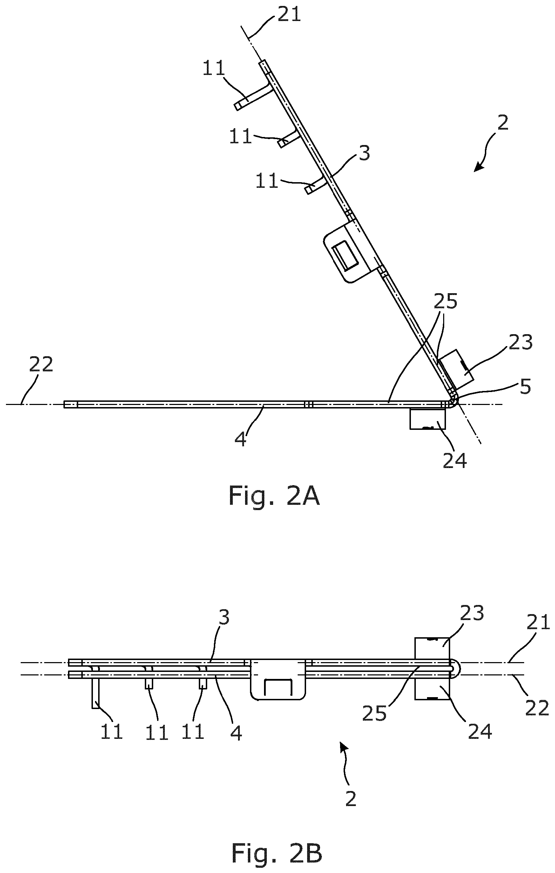

Fig. 2A shows a side view of the bracket element 2 in an open state i.e. where the first body section 3 and the second body section 4 are not parallel. The longitudinal axis 21 of the first body section 3 is angled in relation to the longitudinal axis 22 of the second body section 4. In this view, it is clearly visible that the pins 11 project from the first body section 3. The first body section 3 comprise a first transverse section 23, and the second body section 4 comprise a second transverse section 24. Together the first transverse section 23 and the second transverse section 24 form an attachment section 25 for attaching means for tensioning. In the present embodiment, the transverse sections 23, 24 form a substantially cylindrical wall arranged to receive e.g. a tensioning nut 9 as shown in Fig. 1A - 1C. In the open state of the bracket element 2 (Fig. 1A) it is possible to insert the tensioning nut 9 (not shown) and when the bracket element 2 is closed the tensioning nut 9 is kept in position e.g. as shown in Fig. 1A and 1B.

In fig. 2B, the bracket element 2 is shown in a closed state without a perforated band inserted between the first and second body sections 3, 4. The pins of the first body section 3 project through the holes 12 (not visible) of the second body section 4. It is seen that the two transverse sections 23, 24 forms an attachment section 25. Furthermore, it is shown that the longitudinal axis 21 of the first body section 3 is substantially parallel to the longitudinal axis 22 of the second body section 4.

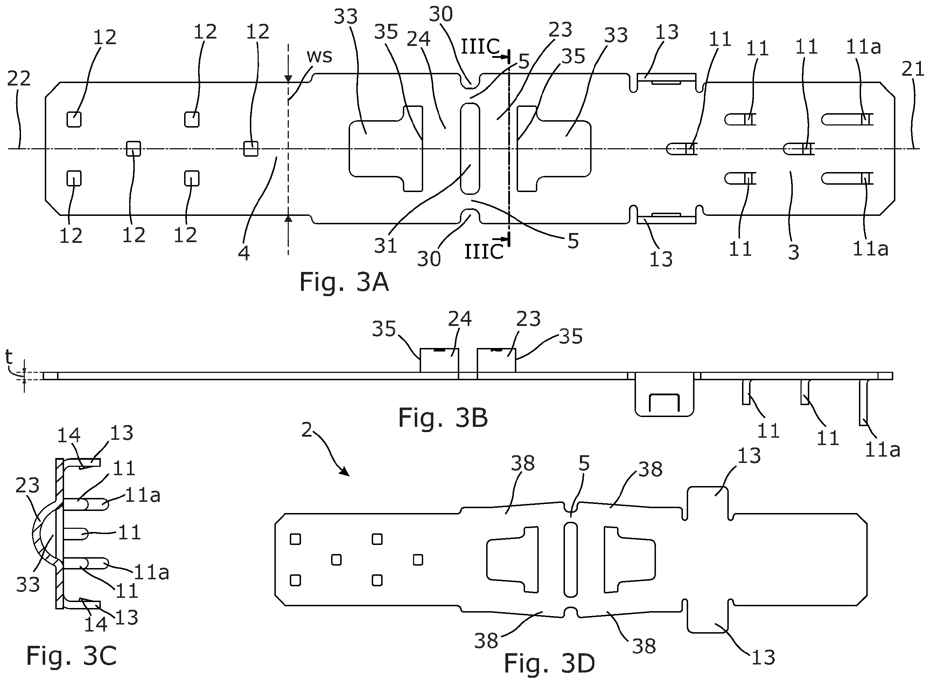

In Fig. 3A-3D the bracket element 2 is shown in an unbend state. In fig. 3A, it is seen that the bracket element 2 is manufactured as a monolithic whole i.e. manufactured out of a single piece of metal. In this embodiment, the pins 11, 11a are stamped or pressed directly out of the first body section 3. The holes 12 are stamped in the second body section 4. It will be understood that various ways may be used in order to form the holes 12 and the pins 11. The bracket element 2 further comprises side cut outs 30 and a central cut-out 31 leaving common section 5 remaining i.e. two hinge-like sections. By adjusting the side cut outs 30 and the central cut out 31, it is possible to adjust the force required to force the two body sections 3, 4 together. Furthermore, in this embodiment, each body section 3, 4 each comprises an attachment hole 33 for at least partly receive the tensioning nut (not shown). In this way, the transverse sections 23, 24 are formed in each body section 3, 4. The transverse sections 23, 24 each comprise a tensioning surface 35 via which the force from the tensioning means is transferred to the bracket element 2 and finally to the perforated band 6 (not shown). In the unbend state of the bracket element 2, the longitudinal axis of the whole bracket element is formed by the longitudinal axis 21 of the first body section 3 and the longitudinal axis 22 of the second body section 4 the one being the direct extension of the other. The width WS of the second body section is adapted to fit between the wall sections 13. It is to be understood by the skilled person that in other embodiments only one wall section may be present.

In Fig. 3B it is shown how the transverse sections 23, 24 each has a tensioning surface 35. In the unbend state, each tensioning surface 35 faces in the opposite direction of the other. However, when the bracket element 2 is bent into its mounted state, the tensioning surfaces 35 face in the same direction. In this view, it is clearly visible that some of the pins 11 may be longer than others i.e. that some pins 11a are longer than the other pins. In this way, it is possible to lock the first body section 3 with the second body section 4 by folding a section of the long pins 11a over the second body section 4 (see e.g. Fig. 1A or 1B).

Fig. 3C shows a cross-sectional view of the bracket element 2 along the line IIIC in Fig. 3A. It is seen that the transverse section 23 project from the body sections as a part of a substantially circular shape. The wall sections 13 comprising the locking means 14 extend from the same piece of metal. The locking means 14 are simply snap locks where the wall section 13 and/or the locking means bends a bit outward when the second body section is forced down between the locks. It is to be understood that the wall sections 13 including the locking means may be positioned at the second body section instead of the first body section.

Fig. 3D shows the fully flat initial material for the bracket element 2 after it is stamped out of a plate or coil. It is seen that the wall sections 13 are not yet folded to project from the first body section. Furthermore, it is seen that the outline areas 38 near the attachment section is widening towards the common section 5. This is due to the fact that it takes more material to form the transverse sections 23, 24 and hence, when the transverse sections are pressed into a semi-circular shape they will need more material. This additional material is taken from the outline areas 38 whereby the final outline of the rim of attachment section will be straight. Hence, in a first state of the bracket element i.e. before forming the transverse sections, the area near the common section may be wider than the rest of the body sections.

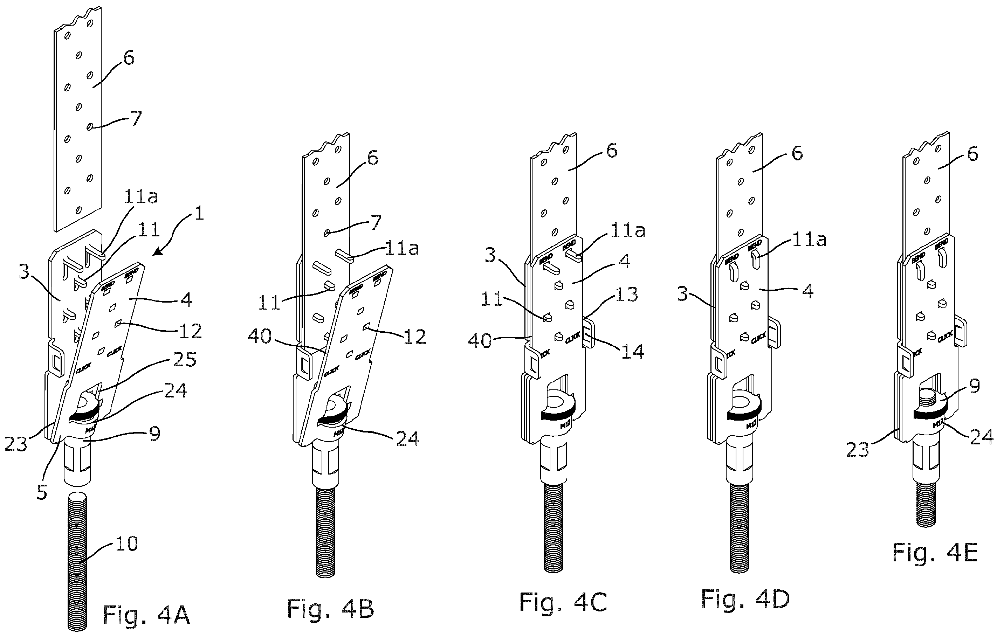

Figs. 4A-4E show the process of mounting a perforated band 6 to the tensioning bracket 1.

Fig. 4A shows the tensioning bracket 1 in an open state having the tensioning nut 9 inserted and kept in position in the attachment section by the transverse 25 sections 23, 24. The first body section 3 and the second body section 4 are angled to each other and kept in position by the common section 5 constituting a hinge. It is seen that the holes 7 of the perforated band 6 and the pins 11, 11a and the holes 12 of the second body section are arranged in the same pattern. It is to be understood that the number of pins 11, 11a may be fewer than the number of holes. Furthermore, it is to be understood that the perforated band 6 does not need have pins 11, 11a inserted in all its holes 7. The threaded rod 10 is not yet inserted in the tensioning nut 9.

In Fig. 4B, the pins 11, 11a of the first body section 3 are received in the holes 7 of the perforated band 6. Typically, at this stage in the mounting of the perforated band 6, the worker has adapted the length of the perforated band, and hence the threaded rod 10 may be inserted in the tensioning nut 9. It is seen that the transverse section 24 is slightly tilted because the first body section 3, and the second body section 4 are still positioned in angled in relation to each other. In this angled position, the rim 40 of the second body section 4 is easily visible.

In Fig. 4C, the second body section 4 is forced towards the first body section 3 i.e. the two body parts are clamped around the perforated band 6. Now the pins 11, 11a are both received in the holes 7 of the perforated band 6 (not visible) and the holes 12 of the second body section 4. Some of the holes 12 may be larger than others in order to easily receive the longer pins 11a. During the clamping of the second body section 4 to towards the first body section 3 the rim 40 of the second body section is forced past the locking means 14 of the wall sections 13. Hence, in the state shown in Fig. 4C the two body sections 3, 4 are already locked together, and the perforated band 6 is secured in its position. It is seen that the transverse sections 23, 24 now form a substantially cylindrical wall providing an even and strong rim for contact with the tensioning nut 9.

In Fig. 4D, the perforated band 6 is secured even further between the body sections 3, 4. The longer pins 11a are sufficiently long to be bend in an approximately 90 degree position i.e. having a section of the pins 11a being substantially parallel with the first body section 3, the second body section and the perforated band 6.

Finally, in Fig. 4E, the tensioning of the perforated band 6 is carried out by turning the tensioning nut 9. The substantially cylindrical wall formed by the two transverse section 23, 24 constitutes a firm area of contact to transfer the forces from the tensioning nut the bracket element 2.

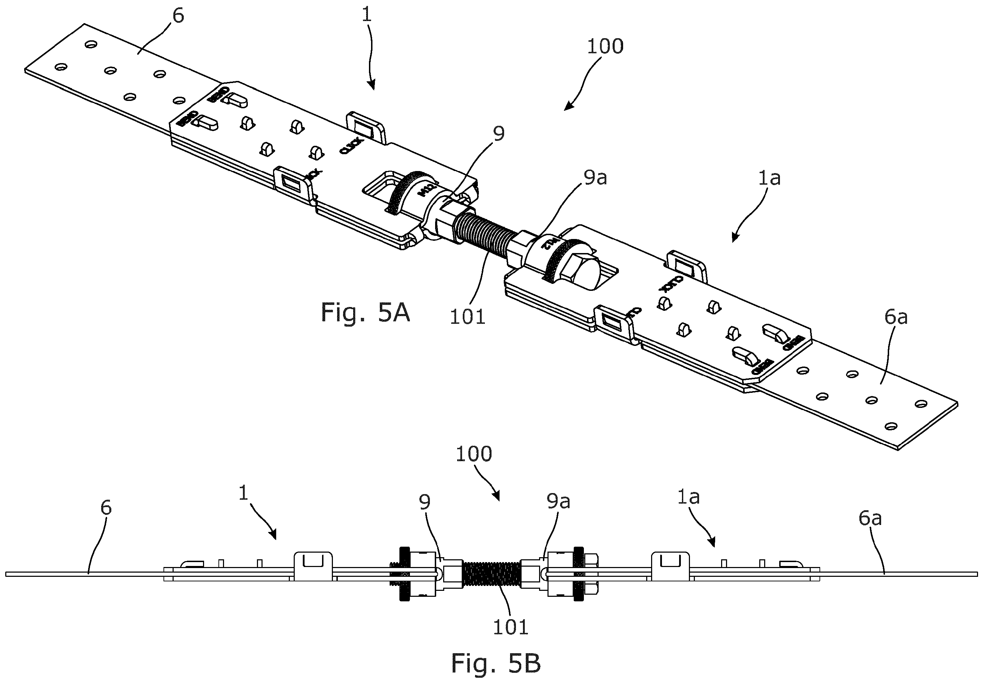

Fig. 5A shows an embodiment of a tensioning system 100 comprising two tensioning brackets 1. The tensioning system 100 is adapted to connect and tension two perforated bands 6, 6a by a connecting tensioning bolt 101. The tensioning bolt 101 inserted in the two tensioning nuts 9, 9a, and the one or both nuts are turned in order to tension the bands. The mounting of the bands 6, 6a is carried out in the same manner as discussed in Fig. 4A-4E.

Fig. 5B shows the tensioning system shown in Fig. 5A in a side view and hence the reference numerals are the same. It is seen that this system provides a direct transfer of the forces from the one band to the other in a substantially straight line i.e. without introduction of torque.

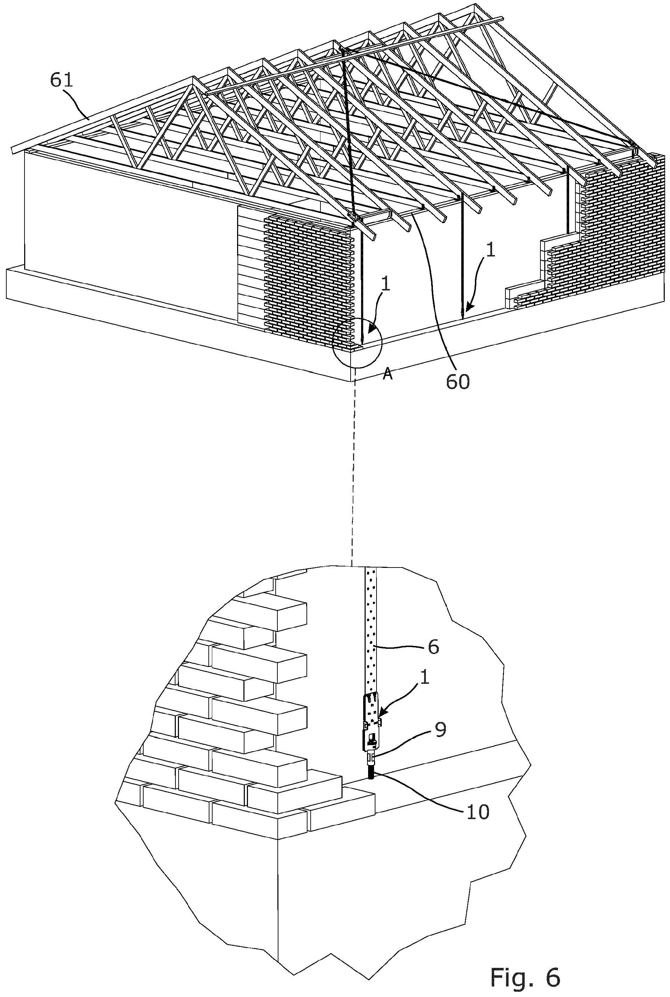

Fig. 6 shows the tensioning bracket 1 in use for holding down a girder 60 of a roof construction. The girder 60 is connected to the trusses 61, and therefore the tie-down forces obtained by the tensioning bracket 1 efficiently connect the foundation of the house with the trusses 61. Therefore, by using the tensioning bracket as a tie-down with perforated band, the roof construction is efficiently protected against high wind loads on the roof.

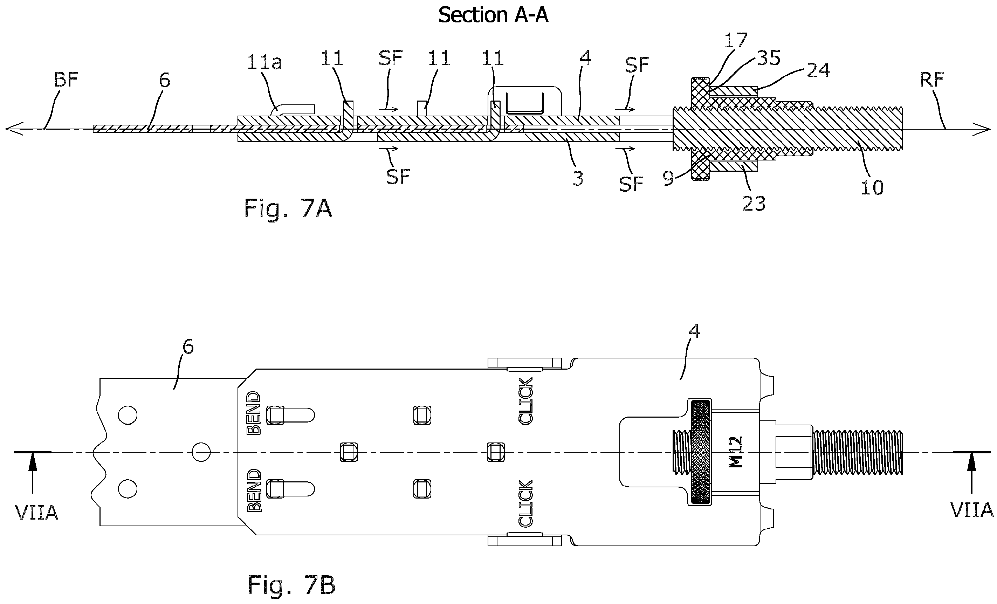

Fig. 7A shows a cross-sectional view of a tensioning bracket 1 as shown in Fig. 1A. Fig. 7B just shows where the cross-sectional view of Fig. 7A is obtained. In Fig. 7A, it is shown that band force BF pulling the perforated band 6 is equal in size to the rod force pulling the tensioning rod 10. The rod force RF is transferred via the flange surface 17 of the tensioning nut 9 to the surface area 35 of the transverse sections 23, 24. The transverse members 23, 24 transfer the force via the body sections 3, 4 to the perforated band 6 via the pins 11, 11a. Having the perforated band 6 arranged between the first and second body section 3, 4 the pins 11, 11a of the first body section and the holes 12 of the second body section 4 constitute a perfectly true double shear connection, and the sheer forces SF are kept as small as possible. In this way, it is achieved that the tensioning bracket 1 provides the maximum force using a minimal amount of material.

Although the invention has been described in the above in connection with preferred embodiments of the invention, it will be evident for a person skilled in the art that several modifications are conceivable without departing from the invention as defined by the following claims.

## Claims

1. Tensioning bracket (1) for tensioning at least one perforated band (6) defining a longitudinal band axis (15), the bracket (1) comprising at least one bracket element (2) having a thickness (t) and comprising:
- a first body section (3) defining:
- a first longitudinal body axis,
- a first body width, and the first body section (3) comprising a number of projecting pins (11) arranged to receive the perforations (7) of the band (6), the projecting pins (11) identifying a pin side and an opposing non-pin side of the bracket element (2), and
a second body section (4) defining:
- a second longitudinal body axis,
- a second body width (WS) comprising a number of holes (12) arranged in the same pattern as the projecting pins (11) of the first body section (3), and
- the bracket element (2) further comprising an attachment section (8) for attaching means for pulling and thereby tensioning, in use, the perforated band (6),
**wherein** the first and second body sections (3, 4) are connected to each other via a common section (5) made of the same piece of material as the first and second body section (3, 4) and wherein the bracket element (2) is configured so that when bending the element along a bending line in the common section (5) the pins (11) of the first section (3) are received in holes (12) of the second body section (4).

2. Tensioning bracket (1) according to claim 1, wherein the bending line in the common section (5) is arranged perpendicular to the longitudinal axis of the element and when the bracket element (2) is bent, the longitudinal axis of the first and second body sections (3, 4) in all their relative positions are positioned in the same plane perpendicular to both the pin side and the non-pin side.

3. Tensioning bracket (1) according to claim 1 or 2, wherein the tensioning bracket (1) further comprises a tensioning nut (9) arranged in the attachment section (8).

4. Tensioning bracket (1) according to claim 3, wherein the tensioning nut (9) is fixated in the longitudinal direction in the attachment section (8).

5. Tensioning bracket (1) according to any of the preceding claims 1 - 4, wherein the common section (5) comprises cut-outs (30, 31).

6. Tensioning bracket (1) according to any of the preceding claims 1 - 5, wherein the attachment section (8) comprises a holding section that is adapted for substantially surrounding the tensioning nut (9).

7. Tensioning bracket (1) according to any of the preceding claims 1 - 6, wherein the number of holes (12) is equal to or greater than the number of pins (11).

8. Tensioning bracket (1) according to any of the preceding claims 1 - 7, wherein the pins (11) extend through the second section by more than the thickness (t) of the bracket element (2).

9. Tensioning bracket (1) according to any of the preceding claims, wherein at least one of the pins (11a) is longer than the other pin(s) (11).

10. Tensioning bracket (1) according to any of the preceding claims, wherein the first and/or second body section (3, 4) comprises one or more wall sections (13).

11. Tensioning bracket (1) according to claim 10, wherein wall section(s) (13) may comprise locking means (14) for locking the first and second body section (3, 4) in relation to each other.

12. Tensioning bracket (1) according to any of the preceding claims 1 - 11, wherein the area of a hole (12) the one body section is less than 2-30% larger than the cross-sectional area of the matching pin (11) to this hole (12) i.e. a pin (11) of the other body section.

13. Tensioning bracket (1) according to any of the preceding claims 1 - 12, wherein the material is high strength steel, galvanised steel or stainless steel.

14. Tensioning system (100) for drawing two wind brace straps towards each other wherein the tensioning system comprises two tensioning brackets (1) according to claims 1-13 and a coupling member, and wherein the tensioning brackets (1) have the attachment section (8) of the tensioning brackets (1) pointing towards each other.

15. Tensioning system (100) according to claim 14 wherein a coupling member is a threaded rod (10) or a bolt (101).

## Patentansprüche

1. Spannkonsole (1) zum Spannen von mindestens einem perforierten Band (6), das eine Bandlängsachse (15) definiert, wobei die Konsole (1) mindestens ein Konsolenelement (2) mit einer Dicke (t) umfasst und Folgendes umfasst:
- ein erstes Körperteilstück (3), das Folgendes definiert:
- eine erste Körperlängsachse,
- eine erste Körperbreite, wobei das erste Körperteilstück (3) eine Anzahl von vorstehenden Stiften (11) umfasst, die derart angeordnet sind, dass sie die Perforationen (7) des Bands (6) aufnehmen, wobei die vorstehenden Stifte (11) eine Stiftseite und eine gegenüberliegende Nicht-Stiftseite des Konsolenelements (2) identifizieren, und
ein zweites Körperteilstück (4), das Folgendes definiert:
- eine zweite Körperlängsachse,
- eine zweite Körperbreite (WS), die eine Anzahl von Löchern (12) umfasst, die in dem gleichen Muster wie die vorstehenden Stifte (11) des ersten Körperteilstücks (3) angeordnet sind, und
- das Konsolenelement (2) ferner ein Anbringungsteilstück (8) zum Anbringen eines Mittels zum Ziehen und dadurch Spannen des perforierten Bands (6) im Gebrauch umfasst,
**wobei** das erste und das zweite Körperteilstück (3, 4) über ein gemeinsames Teilstück (5), das aus dem gleichen Materialstück wie das erste und das zweite Körperteilstück (3, 4) besteht, miteinander verbunden sind und wobei das Konsolenelement (2) derart konfiguriert ist, dass die Stifte (11) des ersten Teilstücks (3), wenn das Element entlang einer Biegelinie in dem gemeinsamen Teilstück (5) gebogen wird, in Löchern (12) des zweiten Körperteilstücks (4) aufgenommen werden.

2. Spannkonsole (1) nach Anspruch 1, wobei die Biegelinie in dem gemeinsamen Teilstück (5) senkrecht zu der Längsachse des Elements angeordnet ist und, wenn das Konsolenelement (2) gebogen wird, die Längsachse des ersten und des zweiten Teilstücks (3, 4) in allen ihren relativen Positionen in der gleichen Ebene senkrecht sowohl zu der Stiftseite als auch zu der Nicht-Stiftseite positioniert ist.

3. Spannkonsole (1) nach Anspruch 1 oder 2, wobei die Spannkonsole (1) ferner eine Spannmutter (9) umfasst, die in dem Anbringungsteilstück (8) angeordnet ist.

4. Spannkonsole (1) nach Anspruch 3, wobei die Spannmutter (9) in der Längsrichtung in dem Anbringungsteilstück (8) fixiert ist.

5. Spannkonsole (1) nach einem der vorhergehenden Ansprüche 1-4, wobei das gemeinsame Teilstück (5) Ausschnitte (30, 31) umfasst.

6. Spannkonsole (1) nach einem der vorhergehenden Ansprüche 1-5, wobei das Anbringungsteilstück (8) ein Halteteilstück umfasst, das dazu ausgelegt ist, die Spannmutter (9) im Wesentlichen zu umgeben.

7. Spannkonsole (1) nach einem der vorhergehenden Ansprüche 1-6, wobei die Anzahl an Löchern (12) gleich oder größer als die Anzahl an Stiften (11) ist.

8. Spannkonsole (1) nach einem der vorhergehenden Ansprüche 1-7, wobei sich die Stifte (11) um mehr als die Dicke (t) des Konsolenelements (2) durch das zweite Teilstück erstrecken.

9. Spannkonsole (1) nach einem der vorhergehenden Ansprüche, wobei mindestens einer der Stifte (11a) länger als der/die andere(n) Stift(e) (11) ist.

10. Spannkonsole (1) nach einem der vorhergehenden Ansprüche, wobei das erste und/oder das zweite Körperteilstück (3, 4) ein oder mehrere Wandteilstücke (13) umfassen.

11. Spannkonsole (1) nach Anspruch 10, wobei das/die Wandteilstück(e) (13) Verriegelungsmittel (14) zum Verriegeln des ersten und des zweiten Körperteilstücks (3, 4) in Bezug aufeinander umfassen kann/können.

12. Spannkonsole (1) nach einem der vorhergehenden Ansprüche 1-11, wobei die Fläche eines Lochs (12) des einen Körperteilstücks weniger als 2-30 % größer als die Querschnittsfläche des zu diesem Loch (12) passenden Stifts (11), d. h. eines Stifts (11) des anderen Körperteilstücks, ist.

13. Spannkonsole (1) nach einem der vorhergehenden Ansprüche 1-12, wobei das Material hochfester Stahl, verzinkter Stahl oder Edelstahl ist.

14. Spannsystem (100) zum Ziehen von zwei Windverbandgurten zueinander, wobei das Spannsystem zwei Spannkonsolen (1) nach den Ansprüchen 1-13 und ein Kopplungselement umfasst und wobei die Spannkonsolen (1) das Anbringungsteilstück (8) der Spannkonsolen (1), die zueinander zeigen, aufweisen.

15. Spannsystem (100) nach Anspruch 14, wobei ein Kopplungselement eine Gewindestange (10) oder ein Bolzen (101) ist.

## Revendications

1. Support de tension (1) pour tendre au moins une bande perforée (6) définissant un axe longitudinal de bande (15), le support (1) comprenant au moins un élément de support (2) ayant une épaisseur (t) et comprenant :
- une première section de corps (3) définissant :
- un premier axe longitudinal de corps,
- une première largeur de corps, et la première section de corps (3) comprenant un certain nombre de broches en saillie (11) agencées pour recevoir les perforations (7) de la bande (6), les broches en saillie (11) identifiant un côté broche et un côté sans broche opposé de l'élément de support (2), et
une deuxième section de corps (4) définissant :
- un deuxième axe longitudinal de corps,
- une deuxième largeur de corps (WS) comprenant un certain nombre de trous (12) disposés selon le même motif que les broches en saillie (11) de la première section de corps (3), et
- l'élément de support (2) comprenant en outre une section de fixation (8) pour attacher des moyens permettant de tirer et ainsi de tendre, lors de l'utilisation, la bande perforée (6),
dans lequel les première et deuxième sections de corps (3, 4) sont reliées l'une à l'autre via une section commune (5) constituée du même morceau de matériau que les première et deuxième sections de corps (3, 4) et dans lequel l'élément de support (2) est configuré de telle sorte que, lors de la flexion de l'élément le long d'une ligne de flexion dans la section commune (5), les broches (11) de la première section (3) sont reçues dans des trous (12) de la deuxième section de corps (4).

2. Support de tension (1) selon la revendication 1, dans lequel la ligne de flexion dans la section commune (5) est disposée perpendiculairement à l'axe longitudinal de l'élément et, lorsque l'élément de support (2) est fléchi, l'axe longitudinal des première et deuxième sections de corps (3, 4) dans toutes leurs positions relatives est positionné dans le même plan perpendiculaire à la fois au côté broche et au côté sans broche.

3. Support de tension (1) selon la revendication 1 ou 2, dans lequel le support de tension (1) comprend en outre un écrou de tension (9) disposé dans la section de fixation (8).

4. Support de tension (1) selon la revendication 3, dans lequel l'écrou de tension (9) est fixé dans la direction longitudinale dans la section de fixation (8).

5. Support de tension (1) selon l'une quelconque des revendications 1 à 4 précédentes, dans lequel la section commune (5) comprend des découpes (30, 31).

6. Support de tension (1) selon l'une quelconque des revendications 1 à 5 précédentes, dans lequel la section de fixation (8) comprend une section de maintien qui est adaptée pour entourer sensiblement l'écrou de tension (9).

7. Support de tension (1) selon l'une quelconque des revendications 1 à 6 précédentes, dans lequel le nombre de trous (12) est égal ou supérieur au nombre de broches (11).

8. Support de tension (1) selon l'une quelconque des revendications 1 à 7 précédentes, dans lequel les broches (11) s'étendent à travers la deuxième section sur plus que l'épaisseur (t) de l'élément de support (2).

9. Support de tension (1) selon l'une quelconque des revendications précédentes, dans lequel au moins l'une des broches (11a) est plus longue que les autres broches (11).

10. Support de tension (1) selon l'une quelconque des revendications précédentes, dans lequel la première et/ou la deuxième section de corps (3, 4) comprend une ou plusieurs sections de paroi (13).

11. Support de tension (1) selon la revendication 10, dans lequel la ou les sections de paroi (13) peuvent comprendre des moyens de verrouillage (14) pour verrouiller les première et deuxième sections de corps (3, 4) l'une par rapport à l'autre.

12. Support de tension (1) selon l'une quelconque des revendications 1 à 11 précédentes, dans lequel la surface d'un trou (12) de l'une des sections du corps est inférieure de 2 à 30 % à la surface de coupe transversale de la broche (11) correspondant à ce trou (12), c'est-à-dire une broche (11) de l'autre section du corps.

13. Support de tension (1) selon l'une quelconque des revendications 1 à 12 précédentes, dans lequel le matériau est de l'acier à haute résistance, de l'acier galvanisé ou de l'acier inoxydable.

14. Système de tension (100) pour tirer deux sangles de contreventement l'une vers l'autre, dans lequel le système de tension comprend deux supports de tension (1) selon les revendications 1 à 13 et un élément d'accouplement, et dans lequel les supports de tension (1) ont la section de fixation (8) des supports de tension (1) orientée l'une vers l'autre.

15. Système de tension (100) selon la revendication 14, dans lequel un élément d'accouplement est une tige filetée (10) ou un boulon (101).
